(19) Europäisches Patentamt / European Patent Office / Office européen des brevets

(11) **EP 4 431 354 A1**

(12) **EUROPEAN PATENT APPLICATION**
published in accordance with Art. 153(4) EPC

(43) Date of publication:
**18.09.2024 Bulletin 2024/38**

(21) Application number: **22952376.6**

(22) Date of filing: **28.07.2022**

(51) International Patent Classification (IPC):
**B60W 10/08** (2006.01)   **B60L 15/20** (2006.01)

(52) Cooperative Patent Classification (CPC):
**B60L 15/20; B60W 10/04; B60W 10/08;
B60W 30/20; B60W 40/10;** Y02T 10/72

(86) International application number:
**PCT/CN2022/108470**

(87) International publication number:
**WO 2024/020914 (01.02.2024 Gazette 2024/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
- **ZHEJIANG ZEEKR INTELLIGENT TECHNOLOGY
CO., LTD.**
**Ningbo, Zhejiang 315899 (CN)**
- **VIRIDI E-MOBILITY TECHNOLOGY (NINGBO)
CO., LTD.**
**Ningbo, Zhejiang 315336 (CN)**

- **Zhejiang Geely Holding Group Co., Ltd.**
**Hangzhou, Zhejiang 310051 (CN)**

(72) Inventors:
- **SHEN, Keqing**
**Zhejiang 315336 (CN)**
- **MA, Yingguo**
**Zhejiang 315336 (CN)**
- **CHEN, Qimiao**
**Zhejiang 315336 (CN)**

(74) Representative: **Barker Brettell LLP
100 Hagley Road
Edgbaston
Birmingham B16 8QQ (GB)**

(54) **ELECTRIC VEHICLE, MOTOR CONTROL METHOD THEREFOR, APPARATUS AND STORAGE MEDIUM**

(57) The present application belongs to the field of electric vehicle technology and specifically relates to an electric vehicle, a motor control method thereof, an apparatus and a storage medium. The motor control method of the electric vehicle of the present application includes: detecting a relative deformation of a transmission system between a driving gear and a wheel end of a motor; determining a first speed difference value of a first driving gear rotation speed and a first wheel end conversion rotation speed when the relative deformation is a first threshold, where the relative deformation being the first threshold value is used to indicate that the driving gear starts to disengage from a driven gear of the transmission system, the first driving gear rotation speed is a rotation speed of the driving gear at a disengagement moment of the driving gear and the driven gear, and the first wheel end conversion rotation speed is a rotation speed obtained by performing a speed ratio conversion on the wheel end rotation speed of the electric vehicle at the disengagement moment; determining an output torque of the motor according to the first speed difference value; and controlling the driving gear to perform a tooth approaching operation relative to the driven gear according the output torque. Therefore, problems of larger vibration and noise of the motor and the transmission system can be reduced or even avoided.

FIG. 3

- Detecting a relative deformation of a transmission system between a driving gear and a wheel end of a motor — S301
- Determining a first speed difference value of a first driving gear rotation speed and a first wheel end conversion rotation speed when the relative deformation is a first threshold — S302
- Determining an output torque of the motor according to the first speed difference value — S303
- Controlling the driving gear to perform a tooth approaching operation relative to the driven gear according the output torque — S304

**Description**

**TECHNICAL FIELD**

The present application relates to the field of electric vehicle technology and, in particular, to an electric vehicle, a motor control method thereof, an apparatus and a storage medium.

**BACKGROUND**

With the development of electric vehicle technology, the application scope of electric vehicles is more and more extensive. For users, driving comfort is one of the main reasons for choosing electric vehicles. In a driving process of an electric vehicle, when a output torque of a motor changes between a positive torque and a negative torque, changing of a gear meshing direction of the motor will lead to gear rattling, thus generating vibration and noise that users can obviously perceive and affecting driving comfort. In addition, gear rattling may also cause damage to transmission mechanisms such as gears or splines.

At present, in order to solve the above problems, an output torque of the motor is usually processed by a filtering processing method (for example, a torque smoothing processing method) to reduce vibration and noise when the output torque of the motor is changed between the positive torque and the negative torque. However, there is still great vibration and noise in this way, which leads to a poor driving experience for a user.

**SUMMARY**

The present application provides an electric vehicle, a motor control method thereof, an apparatus and a storage medium, which are used to solve problems that the motor and a transmission system thereof have great vibration and noise during driving of the electric vehicle.

In a first aspect, an embodiment of the present application provides a motor control method of an electric vehicle, including: detecting a relative deformation of a transmission system between a driving gear and a wheel end of a motor; determining a first speed difference value of a first driving gear rotation speed and a first wheel end conversion rotation speed when the relative deformation is a first threshold, where the relative deformation being the first threshold value is used to indicate that the driving gear starts to disengage from a driven gear of the transmission system, the first driving gear rotation speed is a rotation speed of the driving gear at a disengagement moment of the driving gear and the driven gear, and the first wheel end conversion rotation speed is a rotation speed obtained by performing a speed ratio conversion on the wheel end rotation speed of the electric vehicle at the disengagement moment; determining an output torque of the motor according to the first speed difference value; and controlling the driving gear to perform a tooth approaching operation relative to the driven gear according the output torque.

In one possible embodiment, the determining the output torque of the motor according to the first speed difference value includes: determining a product of the first speed difference value and a first time length as a first product, where the first time length is a duration from the disengagement moment to a contact moment of the driving gear and the driven gear; and if the first product is less than a preset backlash value, determining that the output torque includes a first torque and a second torque, where directions of the first torque and the second torque are opposite, the first torque is a required torque in a time interval from the disengagement moment to a transition moment of the motor in an acceleration state and a deceleration state, and the second torque is a required torque in a time interval from the transition moment to the contact moment.

In one possible embodiment, the first torque and the second torque are determined by the following ways: determining a second speed difference value of a current driving gear speed and a second wheel end conversion rotation speed according to the preset backlash value, the first speed difference value and the first time length at the transition moment, where the second wheel end conversion rotation speed is a rotation speed obtained by performing a speed ratio conversion on the wheel end rotation speed of the electric vehicle at the transition moment; determining a second driving gear rotation speed according to the second speed difference value and the second wheel end conversion rotation speed, where the second driving gear rotation speed is a rotation speed of the driving gear at the transition moment; determining the first torque according to the second driving gear rotation speed, the first driving gear rotation speed, a duration of the disengagement moment and the transition moment, and a sliding friction force of the driving gear under the second driving gear rotation speed; and determining the second torque according to the second driving gear rotation speed, a third driving gear rotation speed, a duration of the transition moment and the contact moment, and a sliding friction force of the driving gear under the third driving gear rotation speed, where the third driving gear rotation speed is a rotation speed of the driving gear at the contact moment.

In one possible embodiment, the determining the output torque of the motor according to the first speed difference value further includes: if the first product is greater than or equal to the preset backlash value, determining a product of the first speed difference value and a second time length as a second product, where the second time length is a duration from the disengagement moment to the transition moment; and if the second product is less than the preset backlash value, determining that the output torque includes the first torque and the second torque, where the directions of the first torque and the second torque are the same.

In one possible embodiment, the determining the output torque of the motor according to the first speed difference value further includes: if the second product is greater than or equal to the preset backlash value, determining a third wheel end conversion rotation speed at a target moment, where the third wheel end conversion rotation speed is a rotation speed obtained by performing a speed ratio conversion on the wheel end rotation speed of the electric vehicle at the target moment, the target moment is a moment when the driving gear re-contact with the driven gear in the second time; and determining a third torque according to the third wheel end conversion rotation speed, the first driving gear rotation speed and a duration of the disengagement moment and the target moment, where the third torque is a required torque in a time interval from the disengagement moment to the target moment, and the output torque includes the third torque.

In one possible embodiment, the determining the relative deformation of the transmission system between the driving gear and the wheel end of the motor further includes: determining a third speed difference value of a current driving gear speed and a driven gear rotation speed when detecting that the output torque of the motor changes; determining a relative displacement of the driving gear and the driven gear according to the third speed difference value; and determining the relative deformation according to the relative displacement.

In a second aspect, an embodiment of the present application provides a motor control apparatus of an electric vehicle, including: a detecting module, configured to detect a relative deformation of a transmission system between a driving gear and a wheel end of a motor; a determining module, configured to determine a first speed difference value of a first driving gear rotation speed and a first wheel end conversion rotation speed when the relative deformation is a first threshold, where the relative deformation being the first threshold value is used to indicate that the driving gear starts to disengage from a driven gear of the transmission system, the first driving gear rotation speed is a rotation speed of the driving gear at a disengagement moment of the driving gear and the driven gear, and the first wheel end conversion rotation speed is a rotation speed obtained by performing a speed ratio conversion on the wheel end rotation speed of the electric vehicle at the disengagement moment; a processing module, configured to determine an output torque of the motor according to the first speed difference value; and a controlling module, configured to control the driving gear to perform a tooth approaching operation relative to the driven gear according the output torque.

In a third aspect, an embodiment of the present application provides an electric vehicle, including: a processor and a memory in communication connection with the processor; where the memory stores computer executable instructions; and the processor executes the computer executable instructions stored in the memory to implement the motor control method of the electric vehicle in the first aspect.

In a fourth aspect, an embodiment of the present application provides a computer-readable storage medium having computer executable instructions stored therein, where when the computer executable instructions are executed by a processor, the motor control method of the electric vehicle in the first aspect is implemented.

In a fifth aspect, an embodiment of the present application provides a computer program product, including a computer program, where when the computer program is executed by a processor, the motor control method of the electric vehicle in the first aspect is implemented.

In the electric vehicle, the motor control method thereof, an apparatus and a storage medium provided by the present application, by analyzing a dynamic process when a meshing direction of a driving gear of a motor changes, combining characteristics of high precision driving gear position and rotation speed measurement of the motor, and a torque adjusted rapidly by the motor, when detecting that a direction of an output torque of the motor is about to change, by controlling the torque of the driving gear to perform an active tooth approaching operation, a speed difference when the driving gear disengages from a driven gear and then re-contacts with the same is reduced, thereby reducing or even eliminating vibration and noise between the driving gear and the driven gear caused by inertia impact. In the present application, there is no need to change original hardware of the electric vehicle or add a new sensor, only by calculating a wheel end rotation speed, a driving gear speed of the motor and a backlash, a tooth approaching control can be realized. At the same time, in the present application, restriction on descending slope or ascending slope of the output torque of the motor can be released to the greatest extent when the direction of the output torque is about to change, so that the output torque of the motor can follow operations and expectations of users, which can avoid problems of an acceleration feeling after the user releases the throttle or a poor response of an electric vehicle after the user steps on the throttle caused on restriction on the descending slope or ascending slope of the output torque of the motor in the related art.

**BRIEF DESCRIPTION OF DRAWINGS**

In order to illustrate technical solutions in embodiments of the present application or in the related art more clearly, the drawings needed to be used in the description of embodiments or the prior art will be briefly introduced below. Obviously, the drawings in the following description are some embodiments of the present application, and other drawings can be obtained for those of ordinary skills in the art according to these drawings without paying creative effort.

FIG. 1 is a schematic curve diagram of a torque filtering method provided by the related art.

FIG. 2 is a schematic structural diagram of an electric vehicle provided by an embodiment of the present application.

FIG. 3 is flowchart of a motor control method of an electric vehicle provided by an embodiment of the present application.

FIG. 4 is a schematic movement process diagram of a driving gear and a driven gear provided by an embodiment of the present application.

FIG. 5 is a schematic curve diagram for controlling a driving gear to perform tooth approaching provided by an embodiment of the present application.

FIG. 6 is a schematic diagram of a first embodiment for simplifying a geometric model for a shadow area in FIG. 5 provided by an embodiment of the present application.

FIG. 7 is a schematic diagram of a second embodiment for simplifying a geometric model for a shadow area in FIG. 5 provided by an embodiment of the present application.

FIG. 8 is a schematic curve diagram of an output torque of a motor corresponding to FIG. 7 provided by an embodiment of the present application.

FIG. 9 is a schematic diagram of a third embodiment for simplifying a geometric model for a shadow area in FIG. 5 provided by an embodiment of the present application.

FIG. 10 is a schematic curve diagram of an output torque of a motor corresponding to FIG. 9 provided by an embodiment of the present application.

FIG. 11 is a schematic structural diagram of a motor control apparatus of an electric vehicle provided by an embodiment of the present application.

FIG. 12 is a block diagram of an electric vehicle illustrated according to an exemplary embodiment.

## DESCRIPTION OF EMBODIMENTS

In order to make purposes, in order to make technical solutions and advantages of embodiments of the present application more clear, the technical solutions of embodiments of the present application will be described clearly and completely with the drawings of the present application in the following, obviously, described embodiments are some embodiments of the present application, but not all embodiments. Based on the embodiments of the present application, all other embodiments made by those skilled in the art under an inspiration of the embodiment belong to the protection scope of the present application.

The terms "first", "second", "third" and "third" and so on (if any) in the description and claims of the present application and the above drawings are used to distinguish similar objects, and not necessarily used to describe a specific order or sequence. It should be understood that data used in this way could be exchanged under an appropriate condition, so that the embodiments of the present application described herein can be implemented in other orders than those illustrated or described herein. In addition, the terms "including" and "having" any variations thereof are intended to cover non-exclusive inclusion, for example, a process, a method, a system, a product or a device that includes a series of steps or units is not necessarily limited to those steps or units explicitly listed, but could include other steps or units not explicitly listed or inherent to such processes, methods, products or devices.

First of all, the terms involved in the present application will be explained.

Torque: a special moment of force that makes an object rotate. A motor torque is an output torque of the motor.

Backlash: a gap between tooth surfaces when a pair of gears mesh. The backlash is a necessary parameter for gear meshing smooth operating.

Relative deformation: a deformation of non-rigid materials when they are stressed, including but not limited to torsion and offset and so on.

In the related art provided in the background, there are at least the following technical problems.

With the increasingly rigorous control for carbon emission in countries all over the world and date table of carbon peaking and carbon neutrality being proposed, and a timetable for banning the sale of gasoline vehicles is designedly proposed. Meanwhile, new energy vehicles, that is, electric vehicles, is vigorously encouraged and supported. From perspective of the current expanding trend of new energy application scope, the scale of research and development, production and application of electric vehicles will increase at a high speed. A driving process of the electric vehicle is implemented by controlling an output torque of a motor according to a target torque determined by a vehicle controller or a motor controller. When the motor changes between a positive torque and a negative torque, that is, when a direction of the output torque of the motor changes, a gear meshing direction of the motor changes, which will lead to gear rattling, thus generating vibration and noise that users can obviously perceive and affecting driving comfort. In addition, gear rattling may also cause damage to transmission mechanisms such as gears or splines.

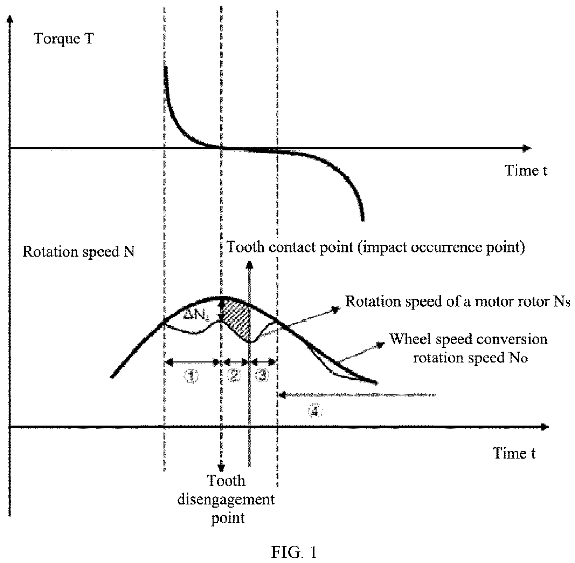

For the above problems, in the related art, an output torque of the motor is usually processed by a filtering processing method to reduce vibration and noise when the output torque of the motor is changed between the positive torque and the negative torque, and the filtering processing method could be a torque smoothing processing method. As shown in FIG. 1, taking a process of changing the output torque of the motor from the positive torque to the negative torque as an example, a speed difference between a driving gear rotation speed and a driven gear rotation speed in a process of a driving gear crossing backlashes is integrated along time, that is, a shaded area in the figure, which is a backlash value. In FIG. 1, a relative movement of the driving gear and the driven gear can be divided into four stages, which are ①, ②, ③ and ④ in FIG. 1 respectively. Stage ① is a stage of positive torque reduction and elastic pressure release; stage ② is a tooth approaching process of the driving gear; stage (3) is a process of contact and compression between the driving gear and the driven gear; stage (4) is a stage of a negative torque increase and elastic pressure compression of the motor. $\Delta N_1$ in FIG. 1 could be used to indicate a speed difference value of a wheel end conversion rotation speed and a driving gear rotation speed at a disengagement moment of the driving gear and the driven gear.

The following problems exist in the above related art: 1) by performing smoothing processing on the output torque, the driving gear slowly pass through a tooth gap in a way of small torque or zero torque output, which leads to a long time for the driving gear slowly pass through the tooth gap and a long time for changing between the positive and negative torques, so that the user feels that the output torque response of the motor is discontinuous and interrupted in terms of driving feeling, so as to perceive that the power output is delayed and the driving experience is poor; 2) when the driving gears contact with the driven gears at a maximum rotation speed difference value, inertial impact and collision noise will still be generated, and the improvement of vibration and noise is not obvious; 3) A torque slope of the driving gear and the driven gear in an elastic pressure release stage is too large, so the $\Delta N_1$ is too large, which leads to an initial speed of the driving gear passing through the backlash being too large, so as to lead to a speed difference between the driving gear and the driven gear being too large when they re-contact, and thus leads to serious impact and continuous jitter of the electric vehicle. Therefore, a descent or ascent of the torque slope in the elastic pressure release stage is limited, which leads to the fact that the electric vehicle still has acceleration after the user releases the throttle or the electric vehicle does not accelerate when the user steps on the throttle, and thus leads to a poor dynamic response of the electric vehicle.

The present application provides a motor control method of an electric vehicle, by analyzing a dynamic process when a meshing direction of a driving gear of a motor in a transmission system changes, combining characteristics of high precision driving gear position and rotation speed measurement of the motor, and a torque adjusted rapidly by the motor, when detecting that a direction of an output torque of the motor changes, by controlling the driving gear to perform a tooth approaching operation, a speed difference when the driving gear disengages from a driven gear and then re-contacts with the same is reduced, thereby reducing or even eliminating vibration and noise between the driving gear and the driven gear caused by inertia impact.

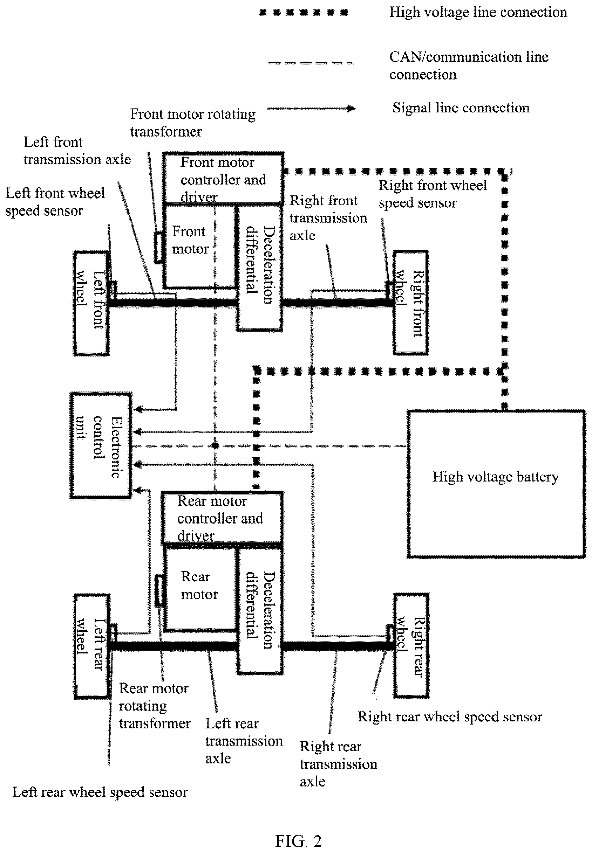

In one embodiment, the motor control method of the electric vehicle can be applied in an application scenario. FIG. 2 is a schematic structural diagram of an electric vehicle provided by an embodiment of the present application. As shown in FIG. 2, the electric vehicle could include an Electronic Control Unit (Electronic Control Unit, ECU), a left front wheel, a left front wheel speed sensor, a left front transmission axle, a front motor rotating transformer, a front motor, a front motor controller and driver, a front motor deceleration differential, a right front transmission axle, a right front wheel speed sensor, a right front wheel, a high voltage battery, a left rear wheel, a left rear wheel speed sensor, a rear motor rotating transformer, a rear motor, a rear motor controller and driver, a rear motor deceleration differential, a left rear transmission axle, a right rear transmission axle, a right rear wheel speed sensor and a right rear wheel.

In the above scenario, a output torque of the front motor is transmitted to the left front wheel and the right front wheel by the front motor deceleration differential; a output torque of the rear motor is transmitted to the left rear wheel and the right rear wheel by the rear motor deceleration differential, and then wheel speeds corresponding to wheels are collected by the left front wheel speed sensor, the right front wheel speed sensor, the left rear wheel speed sensor and the right rear wheel speed sensor respectively. The speed values detected by the left front wheel speed sensor, the right front wheel speed sensor, the left rear wheel speed sensor and the right rear wheel speed sensor are all collected and processed by the ECU, and the ECU determines whether torque directions of the output torques of the front motor and the rear motor change by the obtained wheel speeds, and when the torque directions change, the ECU controls the driving gear to perform a tooth approaching operation, thus realizing an active control of rotation speed of the driving gear, which can reduce or even avoid the problems of large initial speed and a long time consumption when the driving gear pass through a tooth gap. Therefore, the problems that power output delay, vibration and noise can be reduced or even avoided.

Combining with the above scenario, the technical solution of the motor control method of the electric vehicle provided by the present application will be described in detail through several specific embodiments.

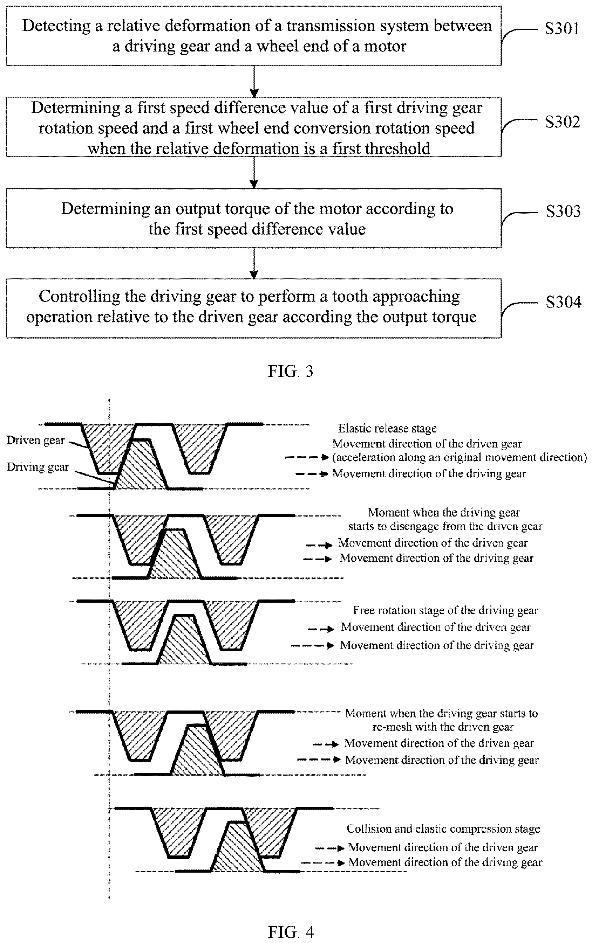

The present application provides a motor control method of an electric vehicle. FIG. 3 is flowchart of a motor control method of an electric vehicle provided by an embodiment of the present application, as shown in FIG.3, the method includes the following steps.

S301: detecting a relative deformation of a transmission system between a driving gear and a wheel end of a motor.

In this step, when a direction of an output torque of the motor is about to change, it is determined whether a meshing direction of a driving gear of the motor and a driven gear of the transmission system is about to change, that is, when the direction of the output torque of the motor changes, it means that the driving gear will disengage from the driven gear, that is, an elastic force between the driving gear and the driven gear will be released, so that the elastic force is reduced and the relative deformation of the transmission system between the driving gear and the wheel end is also reduced.

Optionally, during a running process of the motor, the meshing direction of the driving gear and the driven gear of the motor can be continuously detected, and the relative deformation of the transmission system between the driving gear and the wheel end can be continuously calculated, so that the relative deformation of the transmission system between the driving gear and the wheel end can be determined when the direction of the output torque of the motor is detected to be about to change.

Optionally, the relative deformation of the transmission system between the driving gear and the wheel end could include a gear deformation and an axle deformation.

S302: determining a first speed difference value of a first driving gear rotation speed and a first wheel end conversion rotation speed when the relative deformation is a first threshold.

In this step, the relative deformation being the first threshold value is used to indicate that the driving gear starts to disengage from a driven gear of the transmission system, the first driving gear rotation speed is a rotation speed of the driving gear at a disengagement moment of the driving gear and the driven gear, and the first wheel end conversion rotation speed is a rotation speed obtained by performing a speed ratio conversion on the wheel end rotation speed of the electric vehicle at the disengagement moment. When the relative deformation is the first threshold, it can be that the relative deformation is equal to zero, that is, the moment is the disengagement moment when the driving gear starts to disengage from the driven gear. A process of disengagement and re-contact between the driving gear and the driven gear can be shown in FIG. 4, FIG. 4 is a schematic movement process diagram of a driving gear and a driven gear provided by an embodiment of the present application. In FIG.4, the movement process could be a movement decomposing process between the driving gear and the driven gear after a fixed coordinate system is transformed into a rotating coordinate system by a coordinate (park) transformation, where a frequency of the rotating coordinate system is obtained by performing a wheel speed conversion (the wheel speed is relatively stable, and a relatively stable coordinate system frequency can be obtained). The relative movement between the driving gear and the driven gear can be equivalent to the following six stages or moments: an elastic release stage, a moment when the driving gear starts to disengage from the driven gear, a free rotation stage of the driving gear, a moment when the driving gear starts to re-mesh with the driven gear, a moment when the driving gear start to contact with the driven gear, and an elastic compression stage.

Optionally, the driving gear and the driven gear starting to disengage also could be determined by the following ways: in a process of elastic deformation recovery between the driving gear and the driven gear, a relative deformation recovery is equal to the elastic deformation.

Optionally, when the relative deformation is the first threshold, that is, when the driving gear starts to disengage from the driven gear, a speed difference value of the first driving gear rotation speed and the first wheel end conversion rotation speed at this moment can be determined, and the speed difference value is recorded as the first speed difference value, so as to determine a required output torque of the motor according to the first speed difference value.

S303: determining an output torque of the motor according to the first speed difference value.

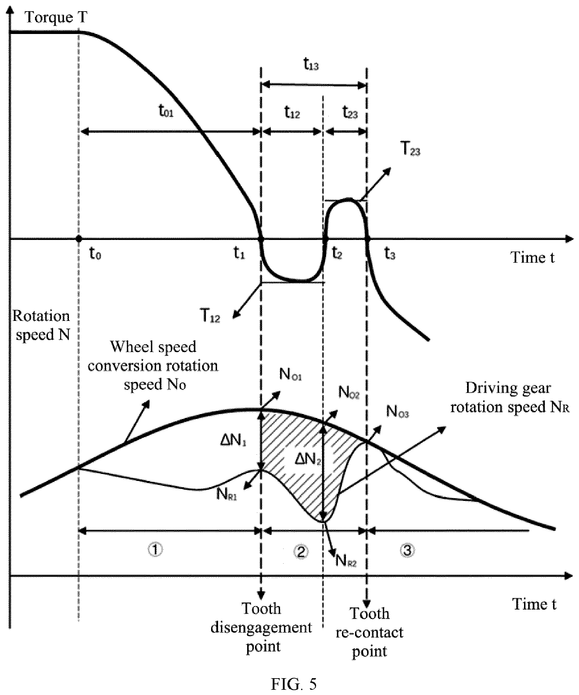

In this step, after the first speed difference value is determined, the output torque of the motor can be calculated by the first speed difference value, as shown in FIG. 5, FIG. 5 is a schematic curve diagram for controlling a driving gear to perform tooth approaching provided by an embodiment of the present application. In FIG. 5, taking that the output torque of the motor changes from a positive torque to a negative torque as an example, the relative movement of the driving gear and the driven gear can be decomposed into three stages, where stage ① can be a positive torque reduction and elastic release stage, stage ② can be tooth approaching stage of the driving gear, and stage ③ can be a stage that a negative torque increase and elastic compress. In FIG.5:

$T_{12}$ can be used to indicate a first torque required to actively control the driving gear to perform tooth approaching, and its function is to make a motor rotor (the driving gear) accelerate and make a motor shaft quickly pass through a gear gap area;

$T_{12}$ can be used to indicate a second torque required to actively control the driving gear to perform tooth approaching, and its function is to reduce a rotation speed difference when meshing surfaces of gears contact, and then reduce inertia impact caused by the rotation speed difference;

$t_0$ can be used to indicate a moment when the output torque of the motor starts to decline when the user releases an accelerator;

$t_1$ can be used to indicate the moment when the driving gear starts to disengage from the driven gear;

$t_2$ can be used to indicate an end moment of action of the first torque $T_{12}$ at which the rotation speed of the driving gear changes from acceleration to deceleration, and can be a preset time point;

$t_3$ can be used to indicate an end moment of action of the second torque $T_{23}$, that is, a moment when the driving gear re-contact with the driven gear ;

$t_{01}$ can be used to indicate a duration from the time when the user releases the throttle to the time when the driving gear starts to disengage from the driven gear;

$t_{12}$ can be used to indicate an action time of the first torque $T_{12}$;

$t_{23}$ can be used to indicate action time of the second torque $T_{23}$;

$t_{13}$ can be used to indicate a total time of $t_{12}+t_{23}$, that is, an action time that actively controlling a driving gear to perform tooth approaching;

No can be used to indicate a rotation speed obtained by performing a speed ratio conversion on the wheel end rotation speed, which is referred to as a wheel end conversion rotation speed for short;

$N_{O1}$ can be used to indicate the wheel end conversion rotation speed at the moment of $t_1$;

$N_{O2}$ can be used to indicate the wheel end conversion rotation speed at the moment of $t_2$;

$N_{O3}$ can be used to indicate the wheel end conversion rotation speed at the moment of $t_3$;

$N_R$ can be used to indicate a motor rotor rotation speed, that is, a driving gear rotation speed;

$N_{R1}$ can be used to indicate the driving gear rotation speed at the end of $t_{01}$, that is, a driving gear rotation speed at the moment of $t_1$;

$N_{R2}$ can be used to indicate the driving gear rotation speed at the end of $t_{12}$, that is, the driving gear rotation speed at the moment of $t_2$;

$\Delta N_1$ can be used to indicate a speed difference between $N_{O1}$ and $N_{R1}$ at the moment of $t_1$, that is, a rotation speed difference between the wheel end conversion rotation speed and the driving gear rotation speed at the disengagement moment of the driving gear and the driven gear;

$\Delta N_2$ can be used to indicate a speed difference between $N_{O2}$ and $N_{R2}$ at the moment of $t_2$, that is, a rotation speed difference between the wheel end conversion rotation speed and the driving gear rotation speed at an end moment of action of the first torque $T_{12}$.

Optionally, a speed difference between the driving gear and the driven gear in a process of the driving gear passing through a backlash can be integrated along time, that is, a shaded area in FIG. 5, which is a backlash value. By determining the first speed difference value, i.e., $\Delta N_1$, the output torque of the motor is obtained by calculating, i.e., $T_{12}$ and $T_{23}$.

Optionally, in stage ① of FIG. 5, an integral range of an elastic release deformation can be as follows: from a moment when the user releases the throttle and thus the driven gear disengages, until a moment when the output torque of the motor is zero or an integral value of the elastic release deformation is equal to a preset elastic deformation value. The preset elastic deformation value can be represented by a mapping table of the output torque and the elastic release deformation. When a cumulative integral value of the elastic release deformation reaches the preset elastic deformation value, the elastic release deformation is considered to be end. A preset method of the mapping table can be as follows: giving different locked-rotor torques of the motor on the whole vehicle or a transmission system assembly in a static state, and measuring a rotation angle of a motor axle under this locked-rotor torque.

In stage ② in FIG. 5, an integral range of backlash can be from the end of the elastic release deformation to a moment when a backlash integral value reaches a preset backlash value S or a self-learning backlash value S.

In stage (3) in FIG. 5, an integral range of the elastic compression deformation can be from the end of backlash integral to a moment when the driving gear re-meshes with the driven gear.

Optionally, an integral calculation formula can be expressed as follows:

$$L = \Sigma \Delta \omega$$

$$\Delta \omega = \Delta N \times 2\pi/60$$

when a sampling frequency is $\Delta t$

$$L_t = L_{t-1} + \Delta \omega \times \Delta t$$

where L can be used to indicate an integral of a relative position difference between the driving gear and the driven gear, and both the elastic deformation integral and the backlash integral can be expressed by this value, the unit is rad rad; ΔN can be used to indicate a speed difference between the driving gear and the driven gear, and the unit is revolution per minute rpm; ω can be used to indicate a speed difference between the driving gear and the driven gear after unit conversion, and the unit is rad/s.

S304: controlling the driving gear to perform a tooth approaching operation relative to the driven gear according the output torque.

In this step, since an active control of a rotational speed of the driving gear is realized by controlling the output torque of the motor, the driving gear is controlled to perform a tooth approaching operation relative to the driven gear by controlling the output torque of the motor, so as to reduce the speed difference between the driving gear and the driven gear when teeth contact and reduce inertia impact when teeth contact, thereby eliminating vibration and noise.

In the motor control method of an electric vehicle provided by the present application, by introducing the elastic deformation when the output torque of the motor changes, the elastic deformation is calculated, and a relative initial speed caused by the elastic deformation is identified, so as to implement a corresponding control strategy of the motor output torque according to the initial speed to control the driving gear to actively perform a tooth approaching operation, thus effectively reducing or even avoiding or solving the inertia impact when the teeth contact, thereby eliminating vibration and noise. In addition, due to the active control of tooth approaching of the driving gear, the contact and compression stages in a torque smoothing processing solution can be eliminated, the time for the driving gear to pass through the backlash can be shortened, and a change process of a tooth meshing surface can be shortened, that is, the change time of a positive torque and a negative torque can be reduced, torque response can be improved, and there is better driving performance.

In one embodiment, the determining the output torque of the motor according to the first speed difference value includes: determining a product of the first speed difference value and a first time length as a first product, where the first time length is a duration from the disengagement moment to a contact moment of the driving gear and the driven gear; and if the first product is less than a preset backlash value, determining that the output torque includes a first torque and a second torque, wherein directions of the first torque and the second torque are opposite, the first torque is a required torque in a time interval from the disengagement moment to a transition moment of the motor in an acceleration state and a deceleration state, and the second torque is a required torque in a time interval from the transition moment to the contact moment.

In this solution, when determining the output torque of the motor according to the first speed difference value, the product of the first speed difference value and the first time length can be determined first, i.e., $\Delta N_1 \times (t_{12} + t_{23})$, when $\Delta N_1 \times (t_{12} + t_{23}) < 2S$ (where S can be used to indicate a default backlash value, and it is an optimal solution when the preset backlash value is 2S), directions of the first torque $T_{12}$ and the second torque $T_{23}$ calculated by the first speed difference value are opposite, and at this moment, an output torque curve can be shown in FIG. 5.

Optionally, by determining the output torque of the motor, the rotation speed of the driving gear can be actively controlled, that is, a torque control of first decelerating and then accelerating (or first accelerating and then decelerating, which depending on a change direction of the output torque of the motor), which reduces a time taken for the driving gear to cross the backlash and reduces or even avoids a problem of slow dynamic response; by controlling the rotation speed of the driving gear, the rotation speed difference when the driving gear and the driven gear re-contact can be reduced. Under an ideal condition, the rotation speed difference can be reduced to zero, and vibration and noise can be completely eliminated.

In one embodiment, the first torque and the second torque are determined by the following ways: determining a second speed difference value of a current driving gear speed and a second wheel end conversion rotation speed according to the preset backlash value, the first speed difference value and the first time length at the transition moment, where the second wheel end conversion rotation speed is a rotation speed obtained by performing a speed ratio conversion on the wheel end rotation speed of the electric vehicle at the transition moment; determining a second driving gear rotation speed according to the second speed difference value and the second wheel end conversion rotation speed, where the second driving gear rotation speed is a rotation speed of the driving gear at the transition moment; determining the first torque according to the second driving gear rotation speed, the first driving gear rotation speed, a duration of the disengagement moment and the transition moment, and a sliding friction force of the driving gear under the second driving gear rotation speed; and determining the second torque according to the second driving gear rotation speed, a third driving gear rotation speed, a duration of the transition moment and the contact moment, and a sliding friction force of the driving gear under the third driving gear rotation speed, where the third driving gear rotation speed is a rotation speed of the driving gear at the contact moment.

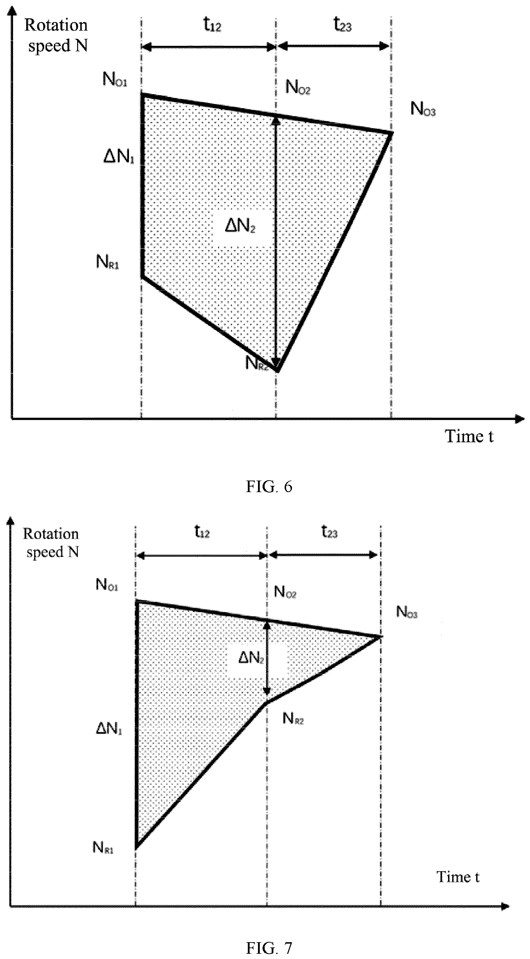

In this solution, a geometric model simplify processing can be performed on the shaded area in FIG. 5, as shown in FIG. 6, the output torque of the motor can be determined by a simplified model shown in FIG. 6.

According to the simplified model, when $N_{O1}$, $N_{R1}$, $t_{12}$ and $t_{23}$ are determined, $N_{O2}$ and $N_{O3}$ are determined values, a time component of $N_{R2}$ is a determined value, and an enclosed area backlash value S of $N_{O1}$, $N_{O3}$, $N_{R1}$ and $N_{R2}$ is also a determined value.

According to the above conditions, speed components of $\Delta N_2$ and $N_{R2}$ can be obtained. Then a speed change rate $a_{12}$ can be obtained by derivation for line segment $N_{R1}N_{R2}$, a speed change rate $a_{23}$ can be obtained by derivation for line segment $N_{R2}N_{O3}$, the first torque $T_{12}$ and the second torque $T_{23}$ can be determined according to the speed change rates $a_{12}$ and $a_{23}$. Formulated as follows:

$$2S = \Delta N_1 \times t_{12} + \Delta N_2 \times (t_{12} + t_{23})$$

$$\Delta N_2 = (2S - \Delta N_1 \times t_{12})/(t_{12} + t_{23})$$

$$N_{R2} = N_{O2} - \Delta N_2 = N_{O2} - (2S - \Delta N_1 \times t_{12})/(t_{12} + t_{23})$$

$$a_{12} = (N_{R2} - N_{R1})/t_{12}$$

$$a_{23} = (N_{O3} - N_{R2})/t_{23}$$

Known a moment of inertia of the motor rotor, the first torque $T_{12}$ and the second torque $T_{23}$ can be obtained according to the moment of inertia of the motor rotor, which can be expressed by the formula as follows:

$$T_{12} = I \times a_{12} + T_F$$

$$T_{23} = I \times a_{23} + T_F$$

where one or more tables can be determined according to different driving modes of the electric vehicle, and a mapping relationship between driving gear rotation speed (or vehicle speed) and $t_{12}$ and $t_{23}$ can be stored in the tables, so $t_{12}$ and $t_{23}$ can be obtained by querying the tables; $T_F$ can be used to represent a sliding friction force of the driving gear rotation under a current driving gear rotation speed and temperature, and the sliding friction force can be obtained by bench test.

Optionally, the wheel end conversion rotation speed can be determined by the following formula:

$$N_O = N * i$$

a vehicle speed prediction formula can be determined by the following formula:

$$V = V_1 + a \times \Delta t = V_1 + a_F \times \Delta t - \sin\theta \times g \times \Delta t + F/m \times \Delta t$$
$$= (N_{O1} + a_O \times \Delta t) \times 2\pi r/K/i$$
$$K = N_1 \times 2\pi r/V_1$$

a vehicle speed acceleration formula can be determined by the following formula:

$$a = a_F - \sin\theta \times g + F/m$$

so

$$a_F \times \Delta t - \sin\theta \times g \times \Delta t + F/m \times \Delta t = a_O \times \Delta t \times 2\pi r/K/i$$

a wheel speed acceleration formula:

$$a_O = a/(\Delta t \times 2\pi r \times K) = (-a_F - \sin\theta \times g + F/m)/ (2\pi r/K/i)$$

a wheel speed prediction formula:

$$N_{O\Delta t} = N_{O1} + a_O \times \Delta t = N_{O1} + (-a_F - \sin\theta \times g + F/m) \times \Delta t/ (2\pi r/K/i)$$

where K can be used to represent a tire slip coefficient; N can be used to represent a wheel speed of the wheel; $N_1$ can be used to indicate a wheel speed of the wheel at a certain moment; $N_O$ can be used to represent the wheel end conversion rotation speed; V can be used to represent the speed of the electric vehicle; $V_1$ can be used to indicate a vehicle speed of the electric vehicle at a certain moment; a can be used to represent an acceleration of a vehicle speed; F can be used to represent a wheel end torque, F = 0 in the process of the driving gear crossing the backlash; $a_F$ can be used to represent a deceleration caused by whole vehicle sliding resistance (wind resistance + wheel end friction force + mechanical friction force of the transmission system), which can be obtained by a sliding curve; $a_O$ can be used to represent a acceleration of a wheel speed; r can be used to represent a radius of the wheel; θ can be used to represent a slope gradient; i can be used to indicate a speed ratio between the wheel and the motor rotor; Δt can be used to indicate a time length of a certain time period; g can be used to represent an acceleration of gravity; m can be used to represent a mass of the electric vehicle.

Optionally, in addition to determining the output torque of the motor to control the driving gear to complete a tooth approaching operation by determining $t_{12}$ and $t_{23}$, the driving gear can also complete the tooth approaching operation by given values of $T_{12}$ and $T_{23}$. One or more tables can be determined according to different driving modes, and a mapping relationship between the driving gear speed (or vehicle speed) and $T_{12}$ and $T_{23}$ is stored in the tables, that is, $T_{12}$ and $T_{23}$ can be obtained by querying the tables, and thus the driving gear can complete the tooth approaching operation after the times corresponding to T12 and T23 are determined, formulas are as follows:

$$a_{12} = I/ T_{12}$$

$$a_{23} = I/ T_{23}$$

$$2S = \Delta N_1 \times t_{12} + \Delta N_2 \times (t_{12} + t_{23})$$

$$\Delta N_2 = \Delta N_1 - a_{13} \times t_{12} + a_{12} \times t_{12}$$

$$\Delta N_1 + a_{12} \times t_{12} = a_{23} \times t_{23} + a_{13} \times (t12 + t23)$$

$$t_{23} = (\Delta N_1 + a_{12} \times t_{12} - a_{13} \times t_{12})/(a_{13} + a_{23})$$

$$2S = \Delta N_1 \times t_{12} + (\Delta N_1 - a_{13} \times t_{12} + a_{12} \times t_{12}) \times (t_{12} + (\Delta N_1 + a_{12} \times t_{12} - a_{13} \times t_{12})/( a_{13} + a_{23}))$$

where $a_{13}$ can be used to express a speed change rate obtained by derivation for the line segment $N_{O1}N_{O3}$.
By the above formula, time $t_{12}$ corresponding to the first torque $T_{12}$ and time $t_{23}$ corresponding to the second torque $T_{23}$ can be determined, that is, the whole tooth approaching process can be determined.
Optionally, when enclosed areas of $N_{O1}$, $N_{O3}$, $N_{R1}$ and $N_{R2}$ are determined as the backlash S, $N_{O1}$ and $N_{R1}$ are determined, and the whole tooth approaching process can also be determined by determining any two quantities of $t_{12}$, $t_{23}$, $T_{12}$, $T_{23}$ and $t_{13}$.

Optionally, by actively controlling the rotation speed of the driving gear, that is, the torque control of first decelerating and then accelerating (or first accelerating and then decelerating, which depending on the direction in which the output torque of the motor is about to change), which reduces a time taken for the driving gear to cross the backlash and reduces or even avoids a problem of slow dynamic response; by controlling the rotation speed of the driving gear, the rotation speed difference when the driving gear and the driven gear re-contact can be reduced. Under an ideal condition, the rotation speed difference can be reduced to zero, and vibration and noise can be completely eliminated.

In one embodiment, the determining the output torque of the motor according to the first speed difference value further includes: if the first product is greater than or equal to the preset backlash value, determining a product of the first speed difference value and a second time length as a second product, where the second time length is a duration from the disengagement moment to the transition moment; and if the second product is less than the preset backlash value, determining that the output torque includes the first torque and the second torque, where the directions of the first torque and the second torque are the same.

In this solution, when the calculated first product is greater than or equal to the preset backlash value 2S, it is necessary to determine the product of the first speed difference value and the second time length, that is, when $\Delta N_1 \times (t_{12} + t_{23}) \geq 2S$, $\Delta N_1 \times t_{12}$ needs to be calculated.

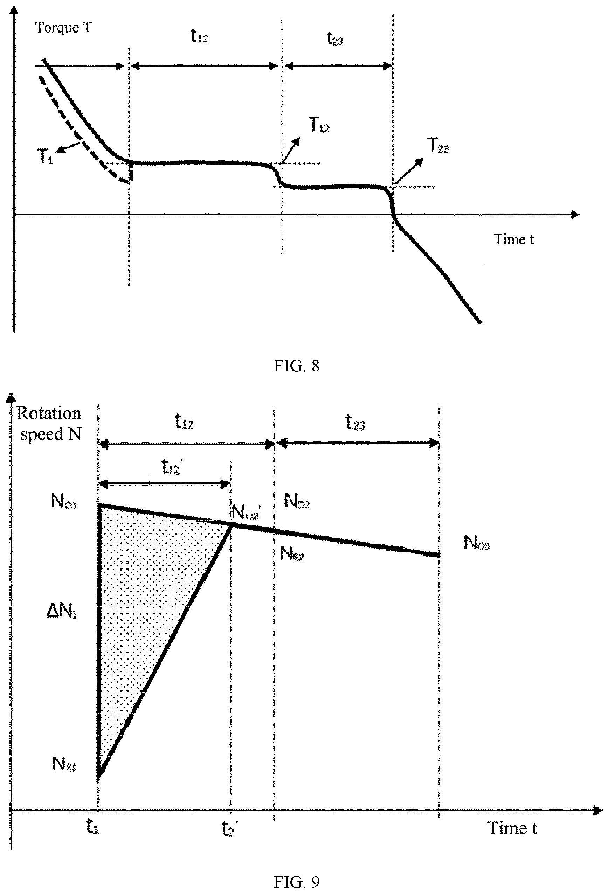

Optionally, if $\Delta N_1 \times t_{12} < 2S$, a geometric model simplify processing can be performed on the shaded area in FIG. 5 to obtain a simplified model as shown in FIG. 7, at this time, formulas for determining the first torque $T_{12}$ and the second torque $T_{23}$ are the same with when $\Delta N_1 \times (t_{12} + t_{23}) < 2S$ in the above, but when $\Delta N_1 \times t_{12} < 2S$, the directions of the first torque $T_{12}$ and the second torque $T_{23}$ are the same, and a output torque curve can be shown in FIG. 8.

Optionally, in FIG. 8, a dotted line $T_1$ can be used to represent a possible torque curve in a descending stage of the output torque, and the torque curve depends on a torque descending slope u, a disengagement moment $t_1$ of the driving gear and the driven gear, and an initial speed difference $\Delta N_1$ when the driving gear is disengaged from the driven gear, where u can be used to represent an average slope of the torque descending from the moment when the user releases the throttle to the disengagement moment of the driving gear and the driven gear ($t_0$ to $t_1$), that is, the torque descending slope.

Optionally, by actively controlling the rotation speed of the driving gear, that is, the torque control of first decelerating and then accelerating (or first accelerating and then decelerating, which depending on the direction in which the output torque of the motor will change), which reduces a time taken for the driving gear to cross the backlash and reduces or even avoids a problem of slow dynamic response; by controlling the rotation speed of the driving gear, the rotation speed difference when the driving gear and the driven gear re-contact can be reduced. Under an ideal condition, the rotation speed difference can be reduced to zero, and vibration and noise can be completely eliminated.

In one embodiment, the determining the output torque of the motor according to the first speed difference value further includes: if the second product is greater than or equal to the preset backlash value, determining a third wheel end conversion rotation speed at a target moment, where the third wheel end conversion rotation speed is a rotation speed obtained by performing a speed ratio conversion on the wheel end rotation speed of the electric vehicle at the target moment, the target moment is a moment when the driving gear re-contact with the driven gear in the second time; and determining a third torque according to the third wheel end conversion rotation speed, the first driving gear rotation speed and a duration of the disengagement moment and the target moment, where the third torque is a required torque in a time interval from the disengagement moment to the target moment, and the output torque includes the third torque.

In this solution, if the second product is greater than or equal to the preset backlash value, i.e., $\Delta N_1 \times t_{12} \geq 2S$, a geometric model simplify processing can be performed on the shaded area in FIG. 5 to obtain a simplified model as shown in FIG. 9, at this time, it is only necessary to calculate a required torque within a time length from $t_1$ to $t_2$, , $t_2$, is a target moment and also is a moment when the driving gear re-contact with the driven gear within a time length from $t_1$ to $t_2$.

Optionally, the output torque (the third torque) of the motor can be determined when $\Delta N_1 \times t_{12} < 2S$ by the following formula:

$$\Delta N_1 \times t_{12'} = 2S$$

$$t_{12'} = 2S/\Delta N_1$$

$$N_{O2'} = N_{O1} - a_{13} \times t_{12'}$$

$$a_{12'} = (N_{O2'} - N_{R1})/t_{12'}$$

$$T_{12'} = I \times a_{12'}$$

where $t_{12}$, can be used to indicate the time length from $t_1$ to $t_{2'}$ ; $N_{O2'}$ can be used to indicate a wheel speed conversion rotation speed when the driving gear re-contact with the driven gear at the moment $t_{12'}$; $a_{12'}$ can be used to express a speed change rate obtained by derivation for a line segment $N_{O1}N_{O2'}$; $T_{12'}$ can be used to represent the third torque.

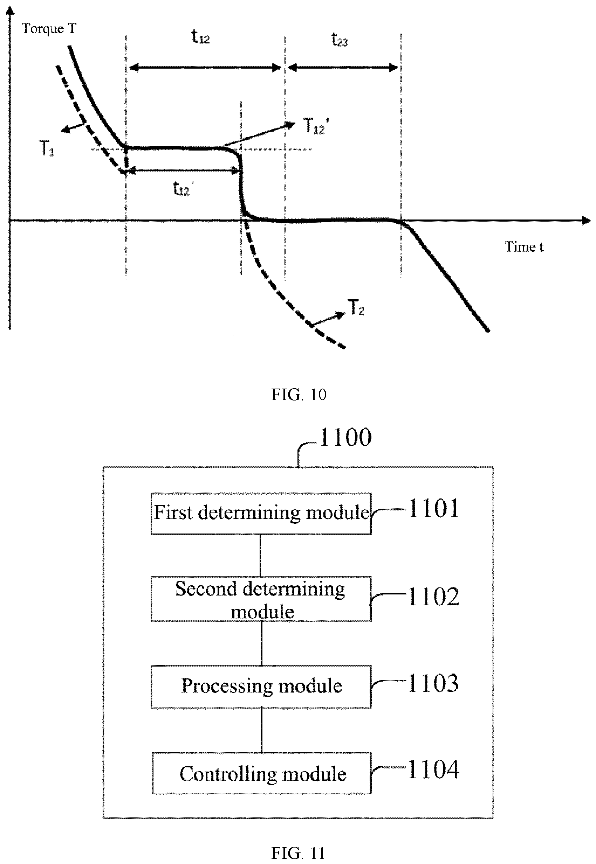

Optionally, when $\Delta N_1 \times t_{12} \geq 2S$, an output torque curve can be as shown in FIG. 10. In FIG. 10, a dotted line $T_1$ can be used to represent a possible torque curve in a descending stage of the output torque, and the torque curve depends on a torque descending slope u, a disengagement moment $t_1$ of the driving gear and the driven gear, and an initial speed difference $\Delta N_1$ when the driving gear is disengaged from the driven gear, and a dotted line $T_2$ can be used to represent a selectable torque curve after the time length of $t_{12'}$.

Optionally, by actively controlling the rotation speed of the driving gear, that is, the torque control of first decelerating and then accelerating (or first accelerating and then decelerating, which depending on the direction in which the output torque of the motor will change), which reduces a time taken for the driving gear to cross the backlash and reduces or even avoids a problem of slow dynamic response; by controlling the rotation speed of the driving gear, the rotation speed difference when the driving gear and the driven gear re-contact can be reduced. Under an ideal condition, the rotation speed difference can be reduced to zero, and vibration and noise can be completely eliminated.

In one embodiment, the detecting the relative deformation of the transmission system between the driving gear and the wheel end of the motor includes: determining whether a direction of the output torque of the motor is about to change; when the direction of output torque is about to change, determining whether a meshing direction of the driving gear and the driven gear of the motor is about to change; when the meshing direction of the driving gear and the driven gear is about to change, determining the relative deformation.

In this solution, the torque transmitted by the transmission system between the driving gear and the wheel will lead to a relative deformation of the transmission system between the driving gear and the wheel end, and an elastic force generated by the deformation of the transmission system between the driving gear and the wheel end will lead to a relative speed difference between the driving gear speed and the wheel end conversion rotation speed during a change process of the output torque. By identifying the relative speed difference, different output torque control strategies are implemented for different relative speed differences, which can effectively reduce or even avoid the problem that "the vehicle still has acceleration after the throttle is released or the vehicle does not accelerate when the throttle is stepped on, and a dynamic response of the vehicle is poor" exists in the related art. Since this solution allows a larger torque slope in the elastic release stage, therefore, a rapid change of positive and negative torques can be realized, thus optimizing the dynamic response of the electric vehicle.

Optionally, whether the direction of the output torque of the motor is about to change can be determined, and whether the direction of the output torque is about to change can include various situations such as the direction of the output torque changing from positive to negative, changing from negative to positive, being zero positive, being zero negative, etc. When the direction of output torque is about to change, whether the meshing direction of the driving gear and the driven gear of the motor is about to change can be determined, and when the meshing direction of the driving teeth and the driven teeth is about to change, the relative deformation of the transmission system between the driving gear and the wheel end of the motor is determined.

In one embodiment, the determining the relative deformation of the transmission system between the driving gear and the wheel end of the motor further includes: determining a third speed difference value of a current driving gear speed and a driven gear rotation speed when detecting that the output torque of the motor changes; determining a relative displacement of the driving gear and the driven gear according to the third speed difference value; and determining the relative deformation according to the relative displacement.

In this solution, if the output torque changes, the third speed difference value of the driving gear rotation speed and the driven gear rotation speed can be calculated in real time in a subsequent movement process of the driving gear and the driven gear, and a speed difference value in each time period of multiple time periods can be determined. Then, the relative displacement of the driving gear and the driven gear can be calculated by the speed difference value in each time period and the time length of the corresponding time period, so as to obtain the relative deformation of the driving gear and the driven gear.

Optionally, relative initial speeds of the driving gear caused by different relative deformations are different. Therefore, different output torque control strategies can be implemented for different initial speeds, so as to realize a rapid change of positive and negative torques and optimize the dynamic response of the electric vehicle.

According to the motor control method of the electric vehicle provided by the present application, by actively controlling the output torque of the motor when the meshing direction of the driving gear and the driven gear changes, the time length taken for the driving gear to re-contact with the driven gear is reduced, positive and negative torque changes are accelerated, power output delay is shortened, and driving performance is optimized. By actively controlling the output torque of the motor when the meshing direction of the driving gear and the driven gear changes, a speed difference when the driving gear contacts with the driven gear is eliminated, and the noise and impact caused by inertial impact are eliminated. In addition, by applying deceleration torque to reduce or eliminate the speed difference when the driving gear contacts with the driven gear, a torque slope in the elastic release stage can be increased, and the rapid change of positive and negative torques can be realized, so that the problem that the vehicle still has acceleration after the throttle is released or the vehicle does not accelerate when the throttle is stepped on can be reduced or even avoided, and the dynamic response of the vehicle can be optimized.

Generally speaking, the technical solution provided by the present application is a technical method that can not only optimize the driving performance of the electric vehicle, but also eliminate noise and impact caused by inertial impact.

The present application further provides a motor control apparatus of an electric vehicle. FIG. 11 is a schematic structural diagram of a motor control apparatus of an electric vehicle provided by an embodiment of the present application. As shown in FIG. 11, a motor control apparatus 1100 of the electric vehicle includes:

a detecting module 1101, configured to detect a relative deformation of a transmission system between a driving gear and a wheel end of a motor;
a determining module 1102, configured to determine a first speed difference value of a first driving gear rotation speed and a first wheel end conversion rotation speed when the relative deformation is a first threshold, where the relative deformation being the first threshold value is used to indicate that the driving gear starts to disengage from a driven gear of the transmission system, the first driving gear rotation speed is a rotation speed of the driving gear at a disengagement moment of the driving gear and the driven gear, and the first wheel end conversion rotation speed is a rotation speed obtained by performing a speed ratio conversion on the wheel end rotation speed of the electric vehicle at the disengagement moment
a processing module 1103, configured to determine an output torque of the motor according to the first speed difference value; and
a controlling module 1104, configured to control the driving gear to perform a tooth approaching operation relative to the driven gear according the output torque.

Optionally, when determining the output torque of the motor according to the first speed difference value, the processing module 1103 is specifically configured to: determine a product of the first speed difference value and a first time length as a first product, where the first time length is a duration from the disengagement moment to a contact moment of the driving gear and the driven gear; and if the first product is less than a preset backlash value, determine that the output torque includes a first torque and a second torque, where directions of the first torque and the second torque are opposite, the first torque is a required torque in a time interval from the disengagement moment to a transition moment of the motor in an acceleration state and a deceleration state, and the second torque is a required torque in a time interval from the transition moment to the contact moment.

Optionally, the motor control apparatus 1100 of the electric vehicle may further include a third determining module (not shown), the third determining module may be specifically configured to determine the first torque and the second torque by the following ways: determine a second speed difference value of a current driving gear speed and a second wheel end conversion rotation speed according to the preset backlash value, the first speed difference value and the first time length at the transition moment, where the second wheel end conversion rotation speed is a rotation speed obtained by performing a speed ratio conversion on the wheel end rotation speed of the electric vehicle at the transition moment; determine a second driving gear rotation speed according to the second speed difference value and the second wheel end conversion rotation speed, where the second driving gear rotation speed is a rotation speed of the driving gear at the transition moment; determine the first torque according to the second driving gear rotation speed, the first driving gear rotation speed, a duration of the disengagement moment and the transition moment, and a sliding friction force of the driving gear under the second driving gear rotation speed; and determine the second torque according to the second driving gear rotation speed, a third driving gear rotation speed, a duration of the transition moment and the contact moment, and a sliding friction force of the driving gear under the third driving gear rotation speed, where the third driving gear rotation speed is a rotation speed of the driving gear at the contact moment.

Optionally, when determining the output torque of the motor according to the first speed difference value, the processing module 1103 is further specifically configured to: if the first product is greater than or equal to the preset backlash value, determine a product of the first speed difference value and a second time length as a second product, where the second time length is a duration from the disengagement moment to the transition moment; and if the second product is less than the preset backlash value, determine that the output torque includes the first torque and the second torque, where the directions of the first torque and the second torque are the same.

Optionally, when determining the output torque of the motor according to the first speed difference value, the processing module 1103 is further specifically configured to: if the second product is greater than or equal to the preset backlash value, determine a third wheel end conversion rotation speed at a target moment, where the third wheel end conversion rotation speed is a rotation speed obtained by performing a speed ratio conversion on the wheel end rotation speed of the electric vehicle at the target moment, the target moment is a moment when the driving gear re-contact with the driven gear in the second time; and determine a third torque according to the third wheel end conversion rotation speed, the first driving gear rotation speed and a duration of the disengagement moment and the target moment, where the third torque is a required torque in a time interval from the disengagement moment to the target moment, and the output torque includes the third torque.

Optionally, when determining the relative deformation of the transmission system between the driving gear and the wheel end of the motor, the first determining module 1101 can further be specifically configured to: determine a third speed difference value of a current driving gear speed and a driven gear rotation speed when detecting that the output torque of the motor changes; determine a relative displacement of the driving gear and the driven gear according to the third speed difference value; and determine the relative deformation according to the relative displacement.

The motor control apparatus of the electric vehicle provided by the embodiment of the present application is used to implement the technical solution of the motor control method of the electric vehicle in the aforementioned method embodiments, and its implementation principle and technical effect are similar, so the details are not repeated here.

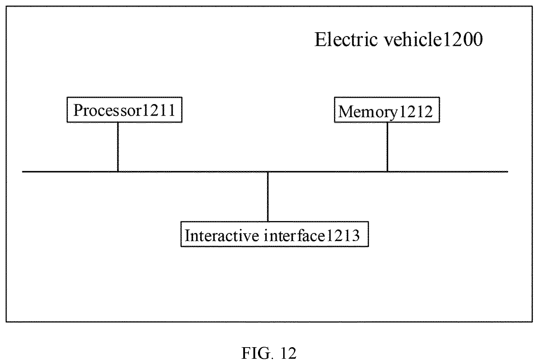

An embodiment of the present application further provides an electric vehicle. FIG. 12 is a block diagram of an electric vehicle illustrated according to an exemplary embodiment. As shown in FIG. 12, the electric vehicle 1200 includes:

a processor 1211, a memory 1212, and an interactive interface 1213;
where the processor 1211 is in communication connection with the memory 1212, the memory 1212 is configured to store computer-executable instructions executable by the processor 1211;
where the processor 1211 is configured to execute the technical solution in the aforementioned motor control method of the electric vehicle by executing the computer-executable instructions.

Optionally, the memory 1212 may be independent or integrated with the processor 1211.

Optionally, when the memory 1212 is a device independent of the processor 1211, the electronic device 1200 may further include: a bus, configured to connect the above devices.

Optionally, the memory can be, but not limited to, a Random Access Memory (Random Access Memory, RAM), a Read Only Memory (Read Only Memory, ROM), a Programmable Read-Only Memory (Programmable Read-Only Memory, PROM), an Erasable Programmable Read-Only Memory (Erasable Programmable Read-Only Memory, EPROM), an Electric Erasable Programmable Read-Only Memory (Electric Erasable Programmable Read-Only Memory, EEPROM), etc. The memory is configured to store programs, and the processor executes the programs after receiving the execution instructions. Further, the software programs and modules in the above memory may also include an operating system, which may include various software components and/or drivers for managing system tasks (such as memory management, storage device control, power management, etc.), and may communicate with various hardware or software components, thereby providing an operating environment for other software components.

Optionally, the processor can be an integrated circuit chip with signal processing capability. The processor can be a general-purpose processor, including a Central Processing Unit (Central Processing Unit, CPU) and a Network Processor (Network Processor, NP). The methods, steps and logic blocks disclosed in the embodiments of the present application can be realized or executed. The general processor can be a microprocessor or the processor can be any conventional processor, etc.

An embodiment of the present application further provides a computer-readable storage medium having computer executable instructions stored therein, where when the computer executable instructions are executed by a processor, the technical solution of the motor control method of the electric vehicle in the aforementioned method embodiments is implemented.

An embodiment of the present application further provides a computer program product including a computer program, where when the computer program is executed by a processor, the technical solution of the motor control method of the electric vehicle in the aforementioned method embodiments is implemented.

It can be understood by those skilled in the art that all or part of the steps for implementing the above method embodiments can be completed by hardware related to program instructions. The aforementioned program can be stored in a computer-readable storage medium. When the program is executed, the steps including the above method embodiments are executed; and the aforementioned storage media includes a ROM, a RAM, a magnetic disk or an optical disk and other media that can store program codes.

Finally, it should be explained that the above embodiments are only used to illustrate the technical solution of the present application, but not to limit it. Although the present application has been described in detail with reference to the foregoing embodiments, it should be understood by those skilled in the art that the technical solution described in the foregoing embodiments can still be modified, or some or all of its technical features can be replaced by equivalents. However, these modifications or substitutions do not make the essence of the corresponding technical solution deviate from a scope of the technical solution of various embodiments of the present application.

**Claims**

1. A motor control method of an electric vehicle, comprising:

    detecting a relative deformation of a transmission system between a driving gear and a wheel end of a motor;
    determining a first speed difference value of a first driving gear rotation speed and a first wheel end conversion rotation speed when the relative deformation is a first threshold, wherein the relative deformation being the first threshold value is used to indicate that the driving gear starts to disengage from a driven gear of the transmission system, the first driving gear rotation speed is a rotation speed of the driving gear at a disengagement moment of the driving gear and the driven gear, and the first wheel end conversion rotation speed is a rotation speed obtained by performing a speed ratio conversion on the wheel end rotation speed of the electric vehicle at the disengagement moment;
    determining an output torque of the motor according to the first speed difference value; and
    controlling the driving gear to perform a tooth approaching operation relative to the driven gear according the output torque.

2. The motor control method according to claim 1, wherein the determining the output torque of the motor according to the first speed difference value comprises:

    determining a product of the first speed difference value and a first time length as a first product, wherein the first time length is a duration from the disengagement moment to a contact moment of the driving gear and the driven gear; and
    if the first product is less than a preset backlash value, determining that the output torque comprises a first torque and a second torque, wherein directions of the first torque and the second torque are opposite, the first torque is a required torque in a time interval from the disengagement moment to a transition moment of the motor in an acceleration state and a deceleration state, and the second torque is a required torque in a time interval from the transition moment to the contact moment.

3. The motor control method according to claim 2, wherein the first torque and the second torque are determined by the following ways:

    determining a second speed difference value of a current driving gear speed and a second wheel end conversion rotation speed according to the preset backlash value, the first speed difference value and the first time length at the transition moment, wherein the second wheel end conversion rotation speed is a rotation speed obtained by performing a speed ratio conversion on the wheel end rotation speed of the electric vehicle at the transition moment;
    determining a second driving gear rotation speed according to the second speed difference value and the second wheel end conversion rotation speed, wherein the second driving gear rotation speed is a rotation speed of the driving gear at the transition moment;
    determining the first torque according to the second driving gear rotation speed, the first driving gear rotation speed, a duration of the disengagement moment and the transition moment, and a sliding friction force of the driving gear under the second driving gear rotation speed; and
    determining the second torque according to the second driving gear rotation speed, a third driving gear rotation speed, a duration of the transition moment and the contact moment, and a sliding friction force of the driving gear under the third driving gear rotation speed, wherein the third driving gear rotation speed is a rotation speed of the driving gear at the contact moment.

4. The motor control method according to claim 2, wherein the determining the output torque of the motor according to the first speed difference value further comprises:

    if the first product is greater than or equal to the preset backlash value, determining a product of the first speed difference value and a second time length as a second product, wherein the second time length is a duration from the disengagement moment to the transition moment; and
    if the second product is less than the preset backlash value, determining that the output torque comprises the first torque and the second torque, wherein the directions of the first torque and the second torque are the same.

5. The motor control method according to claim 4, wherein the determining the output torque of the motor according to the first speed difference value further comprises:

if the second product is greater than or equal to the preset backlash value, determining a third wheel end conversion rotation speed at a target moment, wherein the third wheel end conversion rotation speed is a rotation speed obtained by performing a speed ratio conversion on the wheel end rotation speed of the electric vehicle at the target moment, the target moment is a moment when the driving gear re-contact with the driven gear in the second time; and

determining a third torque according to the third wheel end conversion rotation speed, the first driving gear rotation speed and a duration of the disengagement moment and the target moment, wherein the third torque is a required torque in a time interval from the disengagement moment to the target moment, and the output torque comprises the third torque.

6. The motor control method according to any one of claims 1 to 5, wherein the determining the relative deformation of the transmission system between the driving gear and the wheel end of the motor further comprises:

determining a third speed difference value of a current driving gear speed and a driven gear rotation speed;
determining a relative displacement of the driving gear and the driven gear according to the third speed difference value; and
determining the relative deformation according to the relative displacement.

7. A motor control apparatus of an electric vehicle, comprising:

a detecting module, configured to detect a relative deformation of a transmission system between a driving gear and a wheel end of a motor;
a determining module, configured to determine a first speed difference value of a first driving gear rotation speed and a first wheel end conversion rotation speed when the relative deformation is a first threshold, wherein the relative deformation being the first threshold value is used to indicate that the driving gear starts to disengage from a driven gear of the transmission system, the first driving gear rotation speed is a rotation speed of the driving gear at a disengagement moment of the driving gear and the driven gear, and the first wheel end conversion rotation speed is a rotation speed obtained by performing a speed ratio conversion on the wheel end rotation speed of the electric vehicle at the disengagement moment;
a processing module, configured to determine an output torque of the motor according to the first speed difference value; and
a controlling module, configured to control the driving gear to perform a tooth approaching operation relative to the driven gear according the output torque.

8. An electric vehicle, comprising: a processor and a memory in communication connection with the processor;

wherein the memory stores computer executable instructions; and
the processor executes the computer executable instructions stored in the memory to implement the motor control method of the electric vehicle according to any one of claims 1 to 6.

9. A computer-readable storage medium having computer executable instructions stored therein, wherein when the computer executable instructions are executed by a processor, the motor control method of the electric vehicle according to any one of claims 1 to 6 is implemented.

10. A computer program product, comprising a computer program, wherein when the computer program is executed by a processor, the motor control method of the electric vehicle according to any one of claims 1 to 6 is implemented.

FIG. 1

■ ■ ■ ■ ■ ■    High voltage line connection

— — — — —    CAN/communication line connection

———————▶    Signal line connection

Front motor rotating transformer

Left front transmission axle

Left front wheel speed sensor

Front motor controller and driver

Front motor

Deceleration differential

Right front transmission axle

Right front wheel speed sensor

Left front wheel

Right front wheel

Electronic control unit

High voltage battery

Rear motor controller and driver

Rear motor

Deceleration differential

Left rear wheel

Right rear wheel

Rear motor rotating transformer

Left rear transmission axle

Right rear transmission axle

Right rear wheel speed sensor

Left rear wheel speed sensor

FIG. 2

Detecting a relative deformation of a transmission system between a driving gear and a wheel end of a motor — S301

Determining a first speed difference value of a first driving gear rotation speed and a first wheel end conversion rotation speed when the relative deformation is a first threshold — S302

Determining an output torque of the motor according to the first speed difference value — S303

Controlling the driving gear to perform a tooth approaching operation relative to the driven gear according the output torque — S304

FIG. 3

Driven gear

Driving gear

Elastic release stage
Movement direction of the driven gear
- - - ▶ (acceleration along an original movement direction)
- - ▶ Movement direction of the driving gear

Moment when the driving gear starts to disengage from the driven gear
- - ▶ Movement direction of the driven gear
- - ▶ Movement direction of the driving gear

Free rotation stage of the driving gear
- - ▶ Movement direction of the driven gear
- - - ▶ Movement direction of the driving gear

Moment when the driving gear starts to re-mesh with the driven gear
- - ▶ Movement direction of the driven gear
- - - ▶ Movement direction of the driving gear

Collision and elastic compression stage
- - ▶ Movement direction of the driven gear
- - - ▶ Movement direction of the driving gear

FIG. 4

FIG. 5

FIG. 6

FIG. 7

FIG. 8

FIG. 9

FIG. 10

FIG. 11

Electric vehicle1200

Processor1211

Memory1212

Interactive interface1213

FIG. 12

**EP 4 431 354 A1**

## INTERNATIONAL SEARCH REPORT

| | International application No. |
|---|---|
| | **PCT/CN2022/108470** |

**A. CLASSIFICATION OF SUBJECT MATTER**

B60W 10/08(2006.01)i; B60L 15/20(2006.01)i

According to International Patent Classification (IPC) or to both national classification and IPC

**B. FIELDS SEARCHED**

Minimum documentation searched (classification system followed by classification symbols)

B60W; B60L

Documentation searched other than minimum documentation to the extent that such documents are included in the fields searched

Electronic data base consulted during the international search (name of data base and, where practicable, search terms used)

CNABS; CNTXT; VEN; DWPI; SIPOABS; USTXT, WOTXT; EPTXT; 万方, WANFANG: 齿轮, 转速, 差值, 扭矩, 反向, 齿隙, gear, rotating speed, difference, torque, reverse, lash

**C. DOCUMENTS CONSIDERED TO BE RELEVANT**

| Category* | Citation of document, with indication, where appropriate, of the relevant passages | Relevant to claim No. |
|---|---|---|
| A | CN 111288157 A (HEFEI YANGGUANG ELECTRIC POWER TECHNOLOGY CO., LTD.) 16 June 2020 (2020-06-16) description, paragraphs [0043]-[0119] | 1-10 |
| A | CN 107813815 A (FORD GLOBAL TECHNOLOGIES, L.L.C.) 20 March 2018 (2018-03-20) entire document | 1-10 |
| A | CN 111071235 A (GETEC VEHICLE TECHNOLOGY SUZHOU CO., LTD.) 28 April 2020 (2020-04-28) entire document | 1-10 |
| A | CN 111619364 A (BEIJING ELECTRIC VEHICLE CO., LTD.) 04 September 2020 (2020-09-04) entire document | 1-10 |
| A | JP 2019166936 A (NISSAN MOTOR CORP.) 03 October 2019 (2019-10-03) entire document | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 September 2022** | **22 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/108470**

| Patent document cited in search report | | | Publication date (day/month/year) | Patent family member(s) | | | Publication date (day/month/year) |
|---|---|---|---|---|---|---|---|
| CN | 111288157 | A | 16 June 2020 | CN | 111288157 | B | 16 July 2021 |
| CN | 107813815 | A | 20 March 2018 | DE | 102017120975 | A1 | 15 March 2018 |
| | | | | US | 2018072306 | A1 | 15 March 2018 |
| | | | | US | 10994721 | B2 | 04 May 2021 |
| CN | 111071235 | A | 28 April 2020 | CN | 111071235 | B | 03 August 2021 |
| CN | 111619364 | A | 04 September 2020 | | None | | |
| JP | 2019166936 | A | 03 October 2019 | | None | | |

Form PCT/ISA/210 (patent family annex) (January 2015)